# EUROPÄISCHE PATENTSCHRIFT

(11) **EP 2 975 969 B1**
(45) Veröffentlichungstag und Bekanntmachung des Hinweises auf die Patenterteilung: **15.11.2017**
(21) Anmeldenummer: 14709680.4
(22) Anmeldetag: 13.03.2014
(51) Int. Cl.: A47B 9/00

(54) **BEDIENEINRICHTUNG FÜR EINEN ELEKTRISCH HÖHENVERSTELLBAREN TISCH, ELEKTRISCH HÖHENVERSTELLBARER TISCH, ANTRIEBSSYSTEM FÜR EINEN ELEKTRISCH HÖHENVERSTELLBAREN TISCH UND VERFAHREN ZUR HÖHENVERSTELLUNG EINER TISCHPLATTE EINES TISCHES**
CONTROL DEVICE FOR AN ELECTRICALLY HEIGHT-ADJUSTABLE TABLE, AN ELECTRICALLY HEIGHT-ADJUSTABLE TABLE, A DRIVE SYSTEM FOR AN ELECTRICALLY HEIGHT-ADJUSTABLE TABLE, AND A METHOD FOR ADJUSTING THE HEIGHT OF A TABLE TOP OF A TABLE
DISPOSITIF DE COMMANDE POUR UNE TABLE RÉGLABLE ÉLECTRIQUEMENT EN HAUTEUR, TABLE RÉGLABLE ÉLECTRIQUEMENT EN HAUTEUR, SYSTÈME D'ENTRAÎNEMENT POUR UNE TABLE RÉGLABLE ÉLECTRIQUEMENT EN HAUTEUR ET PROCÉDÉ POUR RÉGLER LA HAUTEUR D'UN PLATEAU D'UNE TABLE

(30) Priorität: 22.03.2013 DE 102013102956; 04.07.2013 DE 102013107053
(43) Veröffentlichungstag der Anmeldung: 27.01.2016
(73) Patentinhaber: Logicdata Electronic & Software Entwicklungs GmbH, 8530 Deutschlandsberg (AT)
(72) Erfinder: KOCH, Walter, 8541 Schwanberg (AT)
(74) Vertreter: Epping - Hermann - Fischer
(86) Internationale Anmeldenummer: PCT/EP2014/054934
(87) Internationale Veröffentlichungsnummer: WO 2014/146963

(56) Entgegenhaltungen:
- EP-A1- 1 470 766
- WO-A1-03/056976
- WO-A2-2009/146709
- DE-A1-102006 008 505

## Beschreibung

Die Erfindung betrifft eine Bedieneinrichtung für einen elektrisch höhenverstellbaren Tisch, einen elektrisch höhenverstellbaren Tisch mit einer solchen Bedieneinrichtung sowie ein Antriebssystem für einen elektrisch höhenverstellbaren Tisch mit einer solchen Bedieneinrichtung. Die Erfindung betrifft ferner ein Verfahren zur Höhenverstellung einer Tischplatte eines Tisches.

Es werden zunehmend elektrisch verstellbare Möbel angeboten. So ist bei vielen Tischen, insbesondere Schreibtischen, die Höhe der Tischplatte über einen speziellen Antrieb elektrisch verstellbar.

Bei herkömmlichen höhenverstellbaren Tischen erfolgt die Bedienung der Höhenverstellung über Schalter an einem Handbedienteil oder über am Tisch angebrachte Bedienelemente, jeweils für eine Aufwärts- oder Abwärtsbewegung der Tischplatte. Solche Bedienelemente oder Handbedienteile lassen sich optisch nur schwer in das Design eines Tisches integrieren.

Das Dokument EP 1 470 766 A1 zeigt einen höhenverstellbaren Tisch mit einem unter der Tischplatte angebrachten Folienschalter zum Auslösen einer Anhebung des Tisches und einem auf der Tischplatte angebrachten zweiten Folienschalter zum Auslösen einer Absenkung der Tischplatte. Die Betätigung der Folienschalter kann zusammen mit einer Motorbelastung ausgewertet werden, um eine Verstellung der Bewegungsrichtung zu beenden und umzukehren.

Bei einigen höhenverstellbaren Tischen ist ein Mechanismus zum Quetschschutz vorgesehen, bei dem ein Drucksensor im Tischbein eine Druckbelastung auswertet und bei ungewöhnlichen Veränderungen eine weitere Verstellung des Tisches verhindert. Dies ist beispielsweise in den Dokumenten WO 2009/146709 A2 und WO 03/056976 A1 beschrieben.

Das Dokument DE 10 2006 008 505 A1 betrifft einen Patientenlagerungstisch, bei dem vorgesehen ist, eine Verschiebung der Tischplatte in zwei horizontalen Dimensionen zu bewirken. Dabei wird eine für die Verschiebung aufgewandte Kraft eines Benutzers ausgewertet, um das Überschreiten einer vorbestimmten Referenzkraft zu verhindern.

Eine zu lösende Aufgabe besteht darin, ein verbessertes Konzept für eine Bedienung eines elektrisch höhenverstellbaren Tisches anzugeben.

Diese Aufgabe wird mit dem Gegenstand der unabhängigen Patentansprüche gelöst. Weiterbildungen und Ausgestaltungsformen sind Gegenstand der abhängigen Ansprüche.

Beispielsweise liegt dem verbesserten Bedienkonzept die Idee zugrunde, auf jeweils starr einer Bewegungsrichtung zugeordnete Betätigungselemente zu verzichten. Stattdessen weist eine Bedieneinrichtung nach dem verbesserten Konzept ein einfaches Betätigungselement, beispielsweise einen elektromechanischen Schalter oder eine berührungsempfindliche Schaltfläche, sowie einen Kraftsensor auf, der eingerichtet ist, eine auf die Tischplatte wirkende Kraft zu messen. Wenn das einfache Betätigungselement betätigt wird, können Messwerte von dem Kraftsensor ausgewertet werden, um festzustellen, ob ein Benutzer des Tisches neben der Betätigung des Betätigungselements auch Kraft in einer Richtung auf den Tisch beziehungsweise die Tischplatte ausübt. Wenn beispielsweise die Tischplatte in einem bestimmten Zeitraum nach der detektierten Betätigung nach oben gezogen wird, kann aufgrund der Kraftänderung eine Aufwärtsbewegung des Tisches ausgelöst werden. Gleichermaßen kann bei entsprechendem Druck auf die Tischplatte eine Abwärtsbewegung der Tischplatte ausgelöst werden. Somit lässt sich eine einfache Bedienung der Höhenverstellung des Tisches mit optisch kaum wahrnehmbaren Betätigungselementen, insbesondere im Fall einer berührungsempfindlichen Schaltfläche, realisieren.

Eine Bedieneinrichtung für einen elektrisch höhenverstellbaren Tisch, der wenigstens einen elektrischen Antrieb zur Höhenverstellung einer Tischplatte des Tisches sowie eine Steuerung zur Ansteuerung des Antriebs aufweist, umfasst in einer beispielhaften Ausführungsform gemäß dem verbesserten Bedienkonzept ein im Bereich der Tischplatte anzuordnendes Betätigungselement, einen Kraftsensor, der eingerichtet ist, eine auf die Tischplatte wirkende Kraft zu messen, und eine Auswerteschaltung. Die Auswerteschaltung ist eingerichtet, eine Betätigung des Betätigungselements zu detektieren während eine Höhenverstellung der Tischplatte blockiert, insbesondere mechanisch blockiert ist. Die Auswerteschaltung ist ferner dazu bestimmt, in einem vorbestimmten Zeitraum nach der detektierten Betätigung Messwerte von dem Kraftsensor zu empfangen und aus den empfangenen Messwerten einen Kraftänderungswert, insbesondere eine absolute Kraftänderung und/oder einen Kraftgradienten, zu bestimmen. Wenn der Kraftänderungswert größer als ein Schwellwert ist, gibt die Auswerteschaltung ein Steuersignal an die Steuerung ab, welches eine Höhenverstellung der Tischplatte in einer Richtung auslöst. Die Richtung hängt dabei von einem Vorzeichen des Kraftänderungswerts ab.

Der Kraftänderungswert kann beispielsweise dadurch bestimmt werden, dass beispielsweise vor der Detektierung der Betätigung des Betätigungselements ein Referenzkraftwert bestimmt wird, welcher beispielsweise einer Ruhebelastung des Tisches entspricht. Der Kraftänderungswert ergibt sich dann zum Beispiel in Relation zu diesem Referenzkraftwert.

Das Auslösen der Höhenverstellung erfolgt wie angegeben, wenn sich innerhalb des vorbestimmten Zeitraums nach der Detektierten Betätigung ein Kraftänderungswert ergibt, der den Schwellwert überschreitet. Die Höhenverstellung kann jedoch theoretisch beliebig lange fortgesetzt werden, praktisch lediglich durch einen Anschlag der Tischplattenbewegung oben beziehungsweise unten begrenzt, solange bestimmte weitere Bedingungen für den Kraftänderungswert erfüllt sind. Beispielsweise kann die Bewegung weiter fortgesetzt werden, solange der Kraftänderungswert größer als der Schwellwert bleibt. Zusätzlich kann die Fortsetzung der Höhenverstellung auch von einem Zustand des Betätigungselements abhängig gemacht werden.

In den verschiedenen Ausführungsformen der Bedieneinrichtung ist die Auswerteschaltung beispielsweise eingerichtet, das Steuersignal zur Höhenverstellung nur solange an die Steuerung abzugeben, wie eine Betätigung des Betätigungselements detektiert wird. Somit kann die Höhenverstellung auch bei aufgebrachter Kraft einfach beendet werden.

Die Auswerteschaltung ist beispielsweise in einigen Ausführungsformen eingerichtet, das Steuersignal mit einer Geschwindigkeitsinformation für die Höhenverstellung abzugeben. Die Geschwindigkeitsinformation hängt dabei von einem Betrag der vom Kraftsensor gemessenen Kraft ab. Insbesondere kann die Geschwindigkeit der Höhenverstellung innerhalb eines vorgegebenen Rahmens einer Minimalgeschwindigkeit und einer Maximalgeschwindigkeit in Abhängigkeit der auf die Tischplatte aufgebrachten Kraft eingestellt werden. Vorzugsweise lässt sich die Geschwindigkeit beziehungsweise die Geschwindigkeitsinformation während eines Vorgangs einer Höhenverstellung variieren, wenn sich die gemessene Kraft während der Höhenverstellung ändert.

Beispielsweise ist der Kraftsensor bei den verschiedenen Ausführungsformen der Bedieneinrichtung dazu eingerichtet, eine zwischen dem Antrieb und der Tischplatte wirkende Kraft zu messen. Der Kraftsensor umfasst in verschiedenen Ausführungsformen wenigstens eines der Folgenden: Einen Dehnungsmessstreifen der zur Befestigung an der Tischplatte vorgesehen ist, einen Dehnungsmessstreifen der zur Befestigung an oder in einem die Tischplatte tragenden Teil des Tisches vorgesehen ist, einen Drucksensor, insbesondere einen piezobasierten Sensor, der zur Befestigung an oder in einem die Tischplatte tragenden Teil des Tisches vorgesehen ist, oder einen kraftabhängigen Widerstand.

Wie zuvor angegeben erfolgt eine Detektierung der Betätigung des Betätigungselements während eine Höhenverstellung der Tischplatte blockiert ist. In verschiedenen Ausführungsformen wird bei einer solchen Blockierung der Höhenverstellung keine elektrische Leistung an einen Motor des Antriebs zugeführt. Beispielsweise wird stattdessen eine mechanische Blockierung über eine mechanische Bremse, ein Halteelement oder dergleichen durchgeführt. Ebenso ist es möglich, dass die Höhenverstellung alleine durch eine Selbsthemmung des elektrischen Antriebs gegeben ist, wenn dieser nicht mit Strom beziehungsweise Spannung versorgt wird.

In alternativen Ausführungsformen kann die Blockierung der Höhenverstellung auch durch Zuführung von elektrischer Leistung an einen Motor des Antriebs erfolgen. Beispielsweise würde in einer solchen Ausgestaltung ohne die Zuführung von elektrischer Leistung alleine durch die auf den Tisch wirkende Kräfte bewegt werden, so dass sich die Höhe sozusagen selbst nach unten verstellt, beispielsweise aufgrund speziell gewählter Selbsthemmung des Antriebs. Durch die Zufuhr elektrischer Leistung wird jedoch die Tischplatte mit einer entsprechenden Regelung in Schwebe gehalten, so dass selbst bei einer Krafteinwirkung auf die Tischplatte keine Höhenverstellung erfolgt.

Um bei den verschiedenen Ausführungsformen einem Benutzer deutlich zu signalisieren, dass durch Drücken auf die beziehungsweise Anheben der Tischplatte eine Höhenverstellung ausgelöst werden kann, ist es in verschiedenen Ausführungsformen der Bedieneinrichtung vorgesehen, entsprechende Signalisierungsmittel vorzusehen, welche die detektierte Betätigung des Betätigungselements anzeigen. Die Signalisierung kann beispielsweise optisch erfolgen, etwa durch ein Leuchtelement oder einen Leuchtstab, welche in die Tischplatte oder an der Tischplatte angebracht sind. Alternativ oder zusätzlich kann die Signalisierung auch akustisch erfolgen. Die Ansteuerung einer solchen Signalisierung erfolgt dementsprechend durch die Auswerteschaltung.

In besonderen Ausgestaltungsformen der Bedieneinrichtung umfasst diese ferner ein weiteres im Bereich der Tischplatte anzuordnendes Betätigungselement, wobei die Auswerteschaltung ferner eingerichtet ist, eine Höhenverstellung der Tischplatte nur auszulösen, wenn während der Blockierung der Höhenverstellung der Tischplatte eine Betätigung beider Betätigungselemente detektiert wird. Durch die Abhängigkeit von der Betätigung zweier Betätigungselemente wird die Sicherheit bezüglich einer ungewollten Höhenverstellung der Tischplatte weiter erhöht.

In verschiedenen Ausführungsformen umfasst das Betätigungselement beziehungsweise umfassen die Betätigungselemente einen elektromechanischen Schalter, der beispielsweise als Folienschalter ausgeführt sein kann.

In alternativen Ausgestaltungsformen umfasst das Betätigungselement beziehungsweise umfassen die Betätigungselemente einen berührungsempfindlichen Sensor, insbesondere einen kapazitiven Sensor. Ein solcher Sensor ist in der Lage, die Berührung beziehungsweise die Annäherung beispielsweise der Hand eines Benutzers zu detektieren und dementsprechend eine Betätigung festzustellen.

Der berührungsempfindliche Sensor ist beispielsweise durch eine leitfähige Fläche gebildet, welche insbesondere aus einem leitfähigen Lack hergestellt ist.

Eine Bedieneinrichtung gemäß einer der zuvor beschriebenen Ausführungsformen kann bei verschiedenartigen elektrisch höhenverstellbaren Tischen eingesetzt werden, die den wenigstens einen elektrischen Antrieb sowie die Steuerung zur Ansteuerung des Antriebs aufweisen.

In einer speziellen Ausführungsform umfasst ein solcher elektrisch höhenverstellbarer Tisch eine Ausführungsform der Bedieneinrichtung, bei der das Betätigungselement einen berührungsempfindlichen Sensor umfasst, welcher durch eine leitfähige Fläche gebildet ist. Dabei ist diese leitfähige Fläche auf einer Oberfläche der Tischplatte oder unter einer Beschichtung der Tischplatte angeordnet. Beispielsweise kann die leitfähige Fläche bei einer massiven Tischplatte ohne Beschichtung direkt auf die Oberfläche der Tischplatte aufgebracht werden, etwa durch Aufkleben einer leitfähigen Folie oder durch das Aufbringen eines elektrisch leitfähigen Lacks. Eine solche Anordnung ist auch bei beschichteten Tischplatten möglich, wobei die leitfähige Fläche auf der Beschichtung aufgebracht wird.

Eine solche Beschichtung kann beispielsweise aus Kunststoff oder aus Furnier gebildet sein. Bei beschichteten Tischplatten ist es somit auch möglich, dass die leitfähige Fläche, welche wiederum aus einer leitfähigen Platte bzw. Folie oder einem leitfähigen Lack gebildet sein kann, unterhalb der Beschichtung beziehungsweise zwischen dem Kern der Tischplatte und der Beschichtung angeordnet ist. Insbesondere bei dieser Ausgestaltung ist das Vorsehen des Betätigungselements für den Betrachter des Tisches nicht sichtbar, so dass sich diese Sensorik besser in das Erscheinungsbild des Tisches einfügt.

Selbstverständlich lässt sich die Tischplatte auch mit mehrere Betätigungselementen beziehungsweise berührungsempfindlichen Sensoren, wie zuvor beschrieben, ausstatten, um die Abhängigkeit von der Betätigung beider Betätigungselemente zu ermöglichen.

Vorzugsweise ist die leitfähige Fläche auf einer dem Boden zugewandten Seite der Tischplatte angeordnet. Dadurch wird einerseits der optische Eindruck der Tischplatte beibehalten beziehungsweise verbessert und andererseits eine Belastung der leitfähigen Fläche durch Anordnung auf der unbelasteten Seite der Tischplatte erreicht.

Weiterhin ist die leitfähige Fläche beziehungsweise sind die leitfähigen Flächen vorzugsweise außerhalb eines Arbeitsbereichs der Tischplatte oder eines Sitzbereichs der Tischplatte angeordnet. Beispielsweise sind leitfähige Flächen nur am von einem Benutzer aus gesehenen rechten beziehungsweise linken Rand der Tischplatte vorgesehen, so dass bei einem üblichen Arbeiten an der Tischplatte eine unbeabsichtigte Betätigung des Betätigungselements verhindert beziehungsweise überwiegend verhindert werden kann.

In verschiedenen Ausgestaltungsformen eines solchen Tisches ist die Auswerteschaltung über eine Schraubverbindung an der Tischplatte befestigt. Dabei ist eine elektrische Verbindung zwischen der Auswerteschaltung und der leitfähigen Fläche über die Schraubverbindung hergestellt, insbesondere ausschließlich hergestellt. Anders ausgedrückt ist eine solche Anordnung frei von anderen elektrischen Verbindungen zwischen der Auswerteschaltung und der leitfähigen Fläche außer der Schraubverbindung.

Eine Bedieneinrichtung gemäß einer der zuvor beschriebenen Ausführungsbeispiele kann auch in einem Antriebssystem für einen elektrisch höhenverstellbaren Tisch eingesetzt werden. Ein solches Antriebssystem gemäß dem verbesserten Bedienkonzept umfasst beispielsweise eine Bedieneinrichtung gemäß einem der zuvor beschriebenen Ausführungsbeispiele, den wenigstens einen elektrischen Antrieb zur Höhenverstellung der Tischplatte des Tisches sowie die Steuerung zur Ansteuerung des Antriebs. Der Antrieb weist dabei eine an einen Motor des Antriebs angeordnete Motorelektronik auf, welche die Steuerung und die Auswerteschaltung umfasst.

Dadurch kann auf ein Vorsehen der Steuerung und der Auswerteschaltung an der Tischplatte direkt verzichtet werden. Vielmehr reicht es aus, die entsprechende Sensorik, also die Betätigungselemente und den oder die Kraftsensoren am Tisch vorzusehen und eine elektrische Verbindung zur Motorelektronik herzustellen. Dadurch lässt sich eine bessere Integration eines solchen Antriebssystems in einem Tisch beziehungsweise einem Tischsystem erreichen, welches insbesondere optisch weniger auffällig für einen Betrachter beziehungsweise Benutzer des Tisches ist.

Vorzugsweise sind bei einem solchen Antriebssystem die Motorelektronik, das Betätigungselement und der Kraftsensor über ein Bussystem miteinander verbunden. Ein solches Bussystem erlaubt somit vereinfacht einen modularen Aufbau des Antriebssystems.

Die Motorelektronik weist beispielsweise einen entsprechend programmierten Mikrocontroller oder dergleichen auf, welcher vorzugsweise sowohl die Ansteuerung der Antriebe als auch die Auswertung der Sensorsignale, also die Funktion der Auswerteschaltung übernimmt.

Gemäß dem verbesserten Bedienkonzept kann auch ein Verfahren zur Höhenverstellung einer Tischplatte eines Tisches angegeben werden. Ein solcher Tisch weist entsprechend der obigen Ausführungen einen Bereich der Tischplatte angeordnetes Betätigungselement sowie einen Kraftsensor auf, der eingerichtet ist, eine auf die Tischplatte wirkende Kraft zu messen. Dabei wird eine Betätigung des Betätigungselements detektiert während eine Höhenverstellung der Tischplatte blockiert ist, insbesondere mechanisch blockiert ist. Von dem Kraftsensor werden in einem vorbestimmten Zeitraum nach der detektierten Betätigung Messwerte empfangen. Aus den empfangenen Messwerten wird ein Kraftänderungswert, insbesondere eine absolute Kraftänderung und/oder ein Kraftgradient bestimmt. Wenn der Kraftänderungswert größer als ein Schwellwert ist, wird eine Höhenverstellung der Tischplatte in einer Richtung durchgeführt, die von einem Vorzeichen des Kraftänderungswerts abhängt.

Beispielsweise wird während der Blockierung der Höhenverstellung keine elektrische Leistung an einen Motor des Antriebs zugeführt. Alternativ erfolgt die Blockierung der Höhenverstellung durch Zuführung von elektrischer Leistung an einen Motor des Antriebs. Diesbezüglich wird auf die Ausführungen weiter oben zur Bedieneinrichtung verwiesen.

Vorzugsweise wird die Höhenverstellung nur solange durchgeführt, wie eine Betätigung des Betätigungselements detektiert wird.

Weitere Ausgestaltungsformen des Verfahrens ergeben sich unmittelbar aus den zuvor beschriebenen Ausführungsformen der Bedieneinrichtung, des Tisches und des Antriebssystems.

Die Erfindung wird nachfolgend an mehreren Ausführungsbeispielen anhand von Figuren näher erläutert. Gleiche Bezugszeichen kennzeichnen hierbei Elemente oder Bauteile gleicher Funktion. Soweit sich Schaltungsteile oder Bauelemente in ihrer Funktion entsprechen, wird deren Beschreibung nicht in jeder der folgenden Figuren wiederholt.

Es zeigen:
- Figur 1: eine Ausführungsform eines elektrisch höhenverstellbaren Tisches,
- Figur 2: eine weitere Ausführungsform eines elektrisch höhenverstellbare Tisches,
- Figur 3: eine weitere Ausführungsform eines elektrisch höhenverstellbare Tisches,
- Figur 4: eine weitere Ausführungsform eines elektrisch höhenverstellbare Tisches,
- Figur 5: eine weitere Ausführungsform eines elektrisch höhenverstellbare Tisches,
- Figur 6: eine weitere Ausführungsform eines elektrisch höhenverstellbare Tisches,
- Figur 7: ein Detail einer Ausführungsform einer Bedieneinrichtung mit einem berührungsempfindlichen Sensor,
- Figur 8: eine weitere Ausführungsform einer Bedieneinrichtung mit einem berührungsempfindlichen Sensor, und
- Figur 9: eine beispielhafte Draufsicht auf eine Tischplatte mit Betätigungselementen.

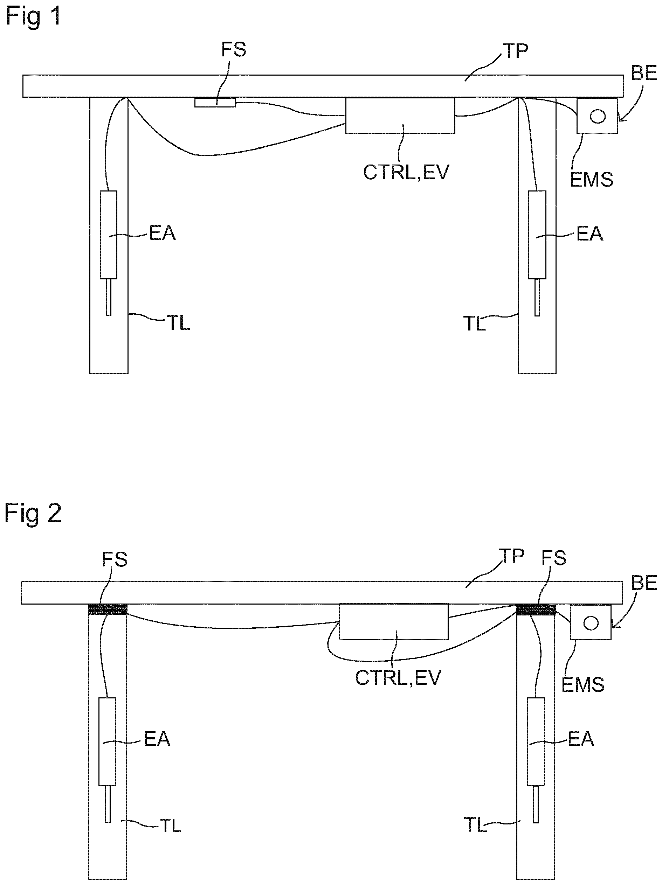

Figur 1 zeigt eine Ausführungsform eines elektrisch höhenverstellbaren Tisches mit einer Tischplatte TP und zwei Tischbeinen TL, in denen jeweils ein elektrischer Antrieb EA vorgesehen ist. Ferner umfasst der Tisch ein Gehäuse mit einer Steuerung CTRL zur Ansteuerung der Antriebe EA und einer Auswerteschaltung EV, einen Kraftsensor FS und ein Betätigungselement BE, das als elektromechanischer Schalter EMS ausgeführt ist.

Die elektrischen Antriebe EA sind lediglich symbolisch dargestellt und repräsentieren beispielsweise einen bekannten Teleskopantrieb, welcher innerhalb der Tischbeine TL angeordnet ist und die Höhenverstellung der Tischplatte TP bewirken kann.

Über den Kraftsensor FS, der beispielsweise als Dehnungsmessstreifen oder als kraftabhängiger Widerstand ausgeführt ist, kann eine Belastung, insbesondere ein Verbiegen der Tischplatte TP festgestellt werden. Die Auswerteschaltung EV ist dabei eingerichtet eine Betätigung des Betätigungselements BE beziehungsweise EMS zu detektieren, während eine Höhenverstellung der Tischplatte TP blockiert ist. Ferner empfängt die Auswerteschaltung EV in einem vorbestimmten Zeitraum nach der detektierten Betätigung Messwerte von dem Kraftsensor FS und bestimmt aus den empfangenen Messwerten einen Kraftänderungswert, insbesondere eine absolute Kraftänderung und/oder einen Kraftgradienten. Wenn der Kraftänderungswert größer als ein Schwellwert ist, wird ein Steuersignal von der Auswerteschaltung EV an die Steuerung CTRL abgegeben, welches eine Höhenverstellung der Tischplatte TP in eine von zwei möglichen Richtungen auslöst. Dabei hängt die Richtung von einem Vorzeichen des Kraftänderungswerts ab. Beispielsweise ist die Auswerteschaltung EV eingerichtet, das Steuersignal mit einer Geschwindigkeitsinformation für die Höhenverstellung an die Steuerung CTRL abzugeben, wobei die Geschwindigkeitsinformation von einem Betrag der vom Kraftsensor FS gemessenen Kraft abhängt. Die Geschwindigkeitsinformation kann dabei während der Dauer basierend auf einer gemessenen Momentankraft variiert werden.

In verschiedenen Ausführungsformen wird bei der beschriebenen Blockierung der Höhenverstellung keine elektrische Leistung an die Motoren der Antriebe EA zugeführt. Beispielsweise wird stattdessen eine mechanische Blockierung über eine mechanische Bremse, ein Halteelement oder dergleichen durchgeführt. Ebenso ist es möglich, dass die Höhenverstellung alleine durch eine Selbsthemmung der elektrischen Antriebe EA gegeben ist, wenn diese nicht mit Strom beziehungsweise Spannung versorgt werden.

In alternativen Ausführungsformen kann die Blockierung der Höhenverstellung auch durch Zuführung von elektrischer Leistung an die Motoren erfolgen. Beispielsweise würde in einer solchen Ausgestaltung ohne die Zuführung von elektrischer Leistung alleine durch die auf die Tischplatte TP wirkende Kräfte bewegt werden, so dass sich die Höhe sozusagen selbst nach unten verstellt, beispielsweise aufgrund speziell gewählter Selbsthemmung des Antriebs EA. Durch die Zufuhr elektrischer Leistung wird jedoch die Tischplatte TP mit einer entsprechenden Regelung in Schwebe gehalten, so dass selbst bei einer Krafteinwirkung auf die Tischplatte TP keine Höhenverstellung erfolgt.

Die Auswerteschaltung EV ist beispielsweise in einigen Ausgestaltungen eingerichtet, das Steuersignal mit einer Geschwindigkeitsinformation für die Höhenverstellung abzugeben. Die Geschwindigkeitsinformation hängt dabei von einem Betrag der vom Kraftsensor FS gemessenen Kraft ab. Insbesondere kann die Geschwindigkeit der Höhenverstellung innerhalb eines vorgegebenen Rahmens einer Minimalgeschwindigkeit und einer Maximalgeschwindigkeit in Abhängigkeit der auf die Tischplatte TP aufgebrachten Kraft eingestellt werden. Vorzugsweise lässt sich die Geschwindigkeit beziehungsweise die Geschwindigkeitsinformation während eines Vorgangs einer Höhenverstellung variieren, wenn sich die gemessene Kraft während der Höhenverstellung ändert.

Für manche Anwendungen kann es gewünscht sein, einem Benutzer deutlich zu signalisieren, dass momentan eine kraftgesteuerte Höhenverstellung ausgelöst werden kann. Dazu können beispielsweise entsprechende Signalisierungsmittel vorgesehen werden, welche die detektierte Betätigung des Betätigungselements BE anzeigen. Die Signalisierung kann beispielsweise optisch erfolgen, etwa durch ein Leuchtelement oder einen Leuchtstab, welche in die Tischplatte TP oder an der Tischplatte TP angebracht sind. Alternativ oder zusätzlich kann die Signalisierung auch akustisch erfolgen. Die Ansteuerung einer solchen Signalisierung erfolgt dementsprechend durch die Auswerteschaltung EV. Solche Signalisierungsmittel sind aus Übersichtsgründen nicht dargestellt, können aber zum Beispiel in das Betätigungselement BE integriert oder am Betätigungselement BE angebracht werden.

Figur 2 zeigt eine weitere Ausführungsform eines Tisches, die im Wesentlichen der Figur 1 entspricht, sich aber durch eine andere Ausgestaltung des Kraftsensors FS unterscheidet. Bei der Ausführungsform der Figur 2 sind in jedem Tischbein TL Kraftsensoren FS vorgesehen, die beispielsweise an oder in einem die Tischplatte tragenden bzw. abstützenden Teil angebracht sind. Ebenso können die Kraftsensoren FS als Drucksensoren, insbesondere als piezobasierte Sensoren ausgebildet sein, die zur Befestigung an oder in einem die Tischplatte tragenden bzw. abstützenden Teil des Tisches vorgesehen sind. Auch die Ausgestaltung als kraftabhängiger Widerstand ist in einem Last tragenden Teil des Tisches möglich. Im Übrigen entspricht die Funktion, insbesondere der Auswerteschaltung EV der bei der Figur 1 beschriebenen Funktion.

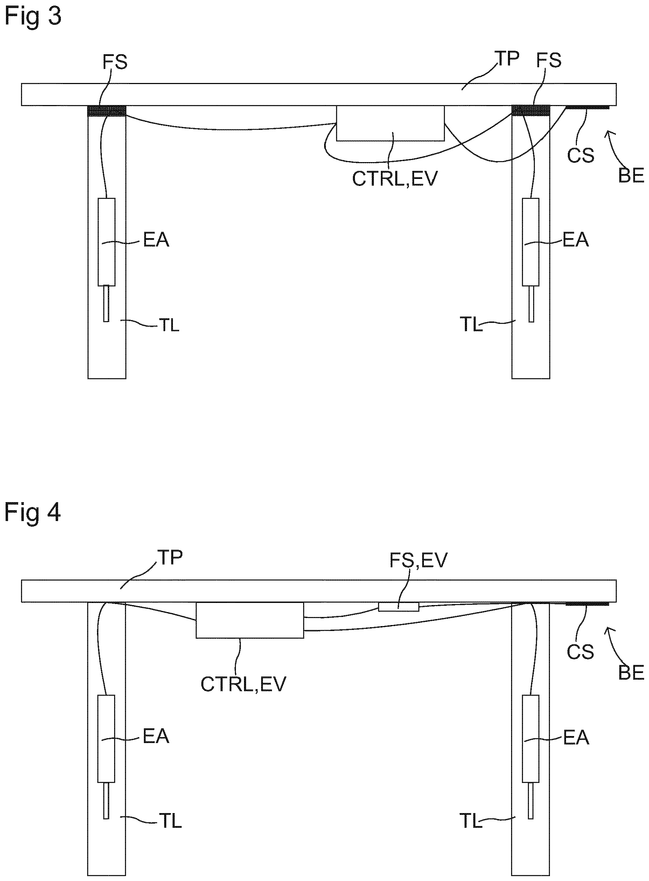

Figur 3 zeigt eine weitere Ausführungsform eines höhenverstellbaren Tisches, die im Wesentlichen der Ausführungsform der Figur 2 entspricht. Lediglich das Bedienelement BE ist bei dieser Ausführungsform als berührungsempfindlicher Sensor, insbesondere als kapazitiver Sensor CS ausgebildet. Dementsprechend muss ein Benutzer, wenn er die Tischplatte verstellen möchte, den berührungsempfindlichen Sensor betätigen, beispielsweise durch Berührung, und dann Kraft auf die Tischplatte ausüben, wobei die Funktion der Auswerteschaltung EV den vorigen Ausführungsformen entspricht.

Figur 4 zeigt eine weitere Ausführungsform eines Tisches, welche den zuvor beschriebenen Ausführungsformen ähnelt. Hierbei sind der Kraftsensor FS und die Auswerteschaltung EV in einem gemeinsamen Gehäuse an der Tischplatte TP befestigt, und elektrisch mit der Steuerung CTRL verbunden. Ferner besteht ein elektrischer Kontakt zwischen dem berührungsempfindlichen Sensor CS und der Auswerteschaltung EV. Dementsprechend kann beispielsweise als Steuerung eine herkömmliche Steuerung verwendet werden, wobei die Auswerteschaltung EV anstelle eines üblichen Bedienteils, wie etwa einem Handschalter, an einen Bedienanschluss der Steuerung CTRL angeschlossen wird.

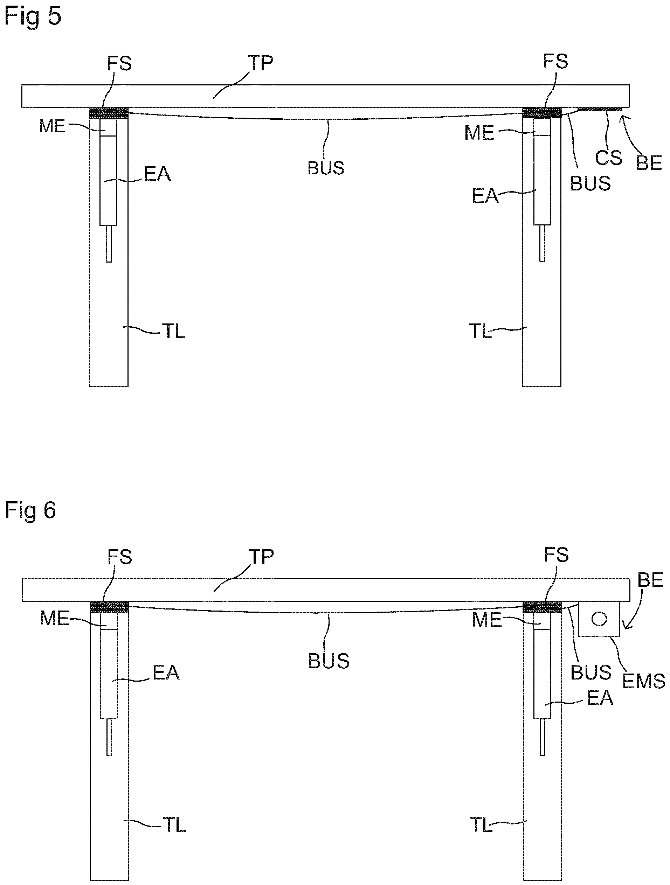

Figur 5 zeigt ein weiteres Ausführungsbeispiel eines elektrisch höhenverstellbaren Tisches, bei dem auf eine separate Steuerung CTRL verzichtet wird und eine Auswertung von Steuersignalen sowie die Funktion der Auswerteschaltung EV von einer Motorelektronik ME durchgeführt wird. Dazu sind das als kapazitiver Sensor CS ausgeführte Bedienelement BE und die beiden Motorelektroniken ME sowie die Kraftsensoren FS über ein Bussystem BUS miteinander verbunden. Die Bedienung der Höhenverstellung des Tisches erfolgt wie zuvor beschrieben durch Betätigung des Betätigungselements BE beziehungsweise Berühren des kapazitiven Sensors CS und anschließender Krafteinwirkung auf die Tischplatte TP.

Figur 6 zeigt eine weitere Ausführungsform eines elektrisch höhenverstellbaren Tisches, welche im Wesentlichen auf der in Figur 5 beschriebenen Ausführungsform basiert. Dabei ist lediglich der kapazitive Sensor CS als Betätigungselement durch einen elektromechanischen Schalter EMS ersetzt. Die übrige Funktion ist unverändert.

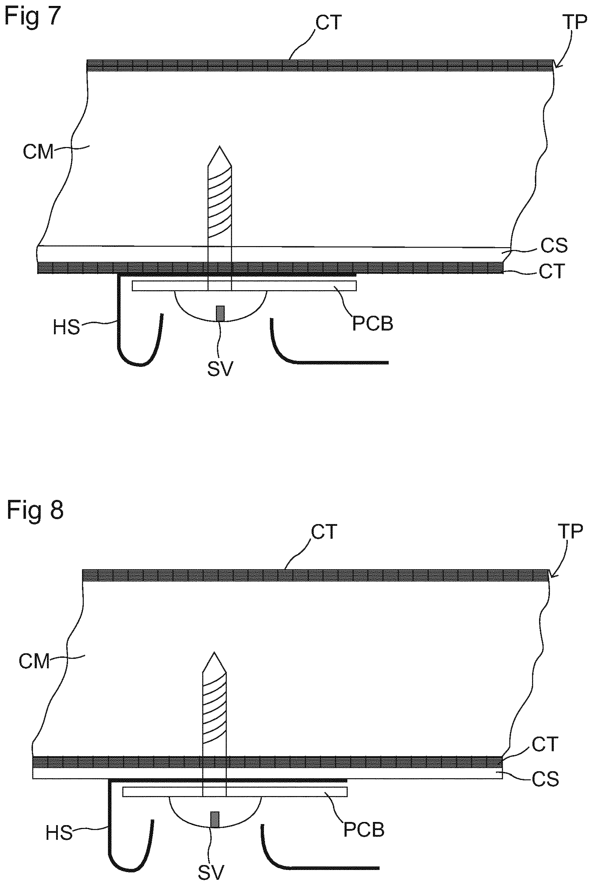

Figur 7 zeigt ein Detail einer Bedieneinrichtung mit einem in die Tischplatte TP integrierten kapazitiven Sensor CS. Die Tischplatte TP umfasst dabei einen Plattenkern CM sowie eine obere und untere Beschichtung CT, die etwa als Furnier oder Kunststoffbeschichtung ausgeführt ist. Auf der Unterseite ist zwischen der Beschichtung CT und dem Plattenkern CM der kapazitive Sensor CS als leitfähige Fläche ausgebildet. Unterhalb der Tischplatte ist ferner ein Gehäuse HS vorgesehen, welches eine Leiterplatte PCB beispielsweise der Steuerung CTRL oder der Auswerteschaltung EV umfasst. Das Gehäuse HS und die Leiterplatte PCB sind über eine Schraubverbindung SV an der Tischplatte TP befestigt. Insbesondere wird über die Schraubverbindung ein elektrischer Kontakt zwischen der Leiterplatte PCB und der leitfähigen Fläche CS hergestellt, so dass auf zusätzliche Kabel oder dergleichen verzichtet werden kann.

Figur 8 zeigt eine Abwandlung der Ausführungsform der Figur 7, bei der die leitfähige Fläche CS außen auf die untere Beschichtung CT der Tischplatte TP aufgebracht ist. Auch hier wird über die Schraubverbindung ein einfacher elektrischer Kontakt zwischen der Leiterplatte PCB und der leitfähigen Fläche CS hergestellt.

Die verschiedenen Variationsmöglichkeiten der in Zusammenhang mit den Figuren 1 bis 8 beschriebenen Elemente können selbstverständlich beliebig miteinander kombiniert werden.

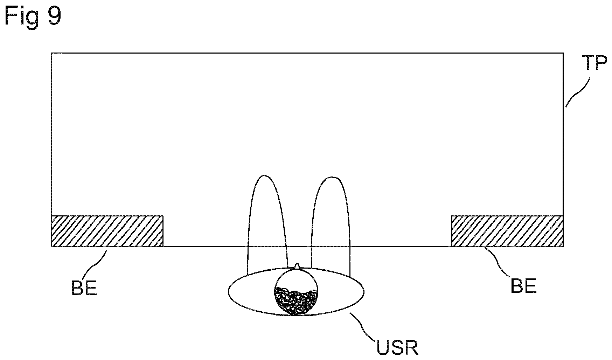

Figur 9 zeigt eine Draufsicht auf eine Tischplatte TP mit schraffiert gekennzeichneten Bereichen, in denen das oder die Betätigungselemente BE vorteilhaft angeordnet werden. Insbesondere sind die schraffierten Bereiche außerhalb eines Sitzbereichs der Tischplatte TP, in dem ein Benutzer USR sitzt, angeordnet, was ein unbeabsichtigtes Betätigen der Betätigungselemente BE verhindert oder zumindest erschwert.

Bei den zuvor beschriebenen Ausführungsformen kann der Kraftsensor auch für andere Zwecke, beispielsweise eine Kollisionserkennung verwendet werden, so dass unter Umständen kein zusätzlicher Materialaufwand entsteht. Ferner können solche Kraftsensoren wie Dehnungsmessstreifen, Piezosensoren oder kraftabhängige Widerstände in Tischsystemen bereits sehr geringe Kraftänderungen auch im Stillstand detektieren. Um ein ungewolltes Losfahren bei Belastung oder Entlastung der Tischplatte zu verhindern, werden vorzugsweise die Messwerte der Kraftsensoren oder des Kraftsensors nur innerhalb eines bestimmten Zeitbereichs nach Betätigung des Betätigungselements erfasst beziehungsweise ausgewertet und können daher nur in diesem Zeitraum zu einer Höhenverstellung der Tischplatte führen.

## Patentansprüche

1. Bedieneinrichtung für einen elektrisch höhenverstellbaren Tisch, der wenigstens einen elektrischen Antrieb (EA) zur Höhenverstellung einer Tischplatte (TP) des Tisches sowie eine Steuerung (CTRL) zur Ansteuerung des Antriebs (EA) aufweist, die Bedieneinrichtung umfassend
- ein im Bereich der Tischplatte (TP) anzuordnendes Betätigungselement (BE, EMS, CS);
**gekennzeichnet durch**
- einen Kraftsensor (FS), der eingerichtet ist, eine auf die Tischplatte (TP) wirkende Kraft zu messen; und
- eine Auswerteschaltung (EV), die eingerichtet ist;
- eine Betätigung des Betätigungselements (BE, EMS, CS) zu detektieren während eine Höhenverstellung der Tischplatte (TP) blockiert, insbesondere mechanisch blockiert, ist;
- in einem vorbestimmten Zeitraum nach der detektierten Betätigung, Messwerte von dem Kraftsensor (FS) zu empfangen;
- aus den empfangenen Messwerten einen Kraftänderungswert, insbesondere eine absolute Kraftänderung und/oder einen Kraftgradienten, zu bestimmen; und
- wenn der Kraftänderungswert größer als ein Schwellwert ist, ein Steuersignal an die Steuerung (CTRL) abzugeben, welches eine Höhenverstellung der Tischplatte (TP) in einer Richtung auslöst, wobei die Richtung von einem Vorzeichen des Kraftänderungswerts abhängt.

2. Bedieneinrichtung nach Anspruch 1,
bei der während der Blockierung der Höhenverstellung keine elektrische Leistung an einen Motor des Antriebs (EA) zugeführt wird.

3. Bedieneinrichtung nach Anspruch 1 oder 2,
bei der der Kraftsensor (FS) eingerichtet ist eine zwischen dem Antrieb (EA) und der Tischplatte (TP) wirkende Kraft zu messen.

4. Bedieneinrichtung nach einem der Ansprüche 1 bis 3, ferner umfassend ein weiteres im Bereich der Tischplatte (TP) anzuordnendes Betätigungselement (BE, EMS, CS), wobei die Auswerteschaltung (EV) eingerichtet ist, eine Höhenverstellung der Tischplatte (TP) nur auszulösen, wenn während der Blockierung der Höhenverstellung der Tischplatte (TP) eine Betätigung beider Betätigungselemente (BE, EMS, CS) detektiert wird.

5. Bedieneinrichtung nach einem der Ansprüche 1 bis 4, bei der die Auswerteschaltung (EV) eingerichtet ist, das Steuersignal mit einer Geschwindigkeitsinformation für die Höhenverstellung abzugeben, wobei die Geschwindigkeitsinformation von einem Betrag der vom Kraftsensor (FS) gemessenen Kraft abhängt.

6. Bedieneinrichtung nach einem der Ansprüche 1 bis 5, bei der das Betätigungselement (BE) einen berührungsempfindlichen Sensor (CS), insbesondere einen kapazitiven Sensor, umfasst.

7. Bedieneinrichtung nach Anspruch 6,
bei der der berührungsempfindliche Sensor (CS) durch eine leitfähige Fläche, insbesondere aus einem leitfähigen Lack, gebildet ist.

8. Elektrisch höhenverstellbarer Tisch umfassend eine Bedieneinrichtung nach Anspruch 7, den wenigstens einen elektrischen Antrieb (EA) zur Höhenverstellung der Tischplatte (TP) des Tisches sowie die Steuerung (CTRL) zur Ansteuerung des Antriebs (EA), wobei die leitfähige Fläche (CS) auf einer Oberfläche der Tischplatte (TP) oder unter einer Beschichtung (CT), insbesondere aus Kunststoff oder Furnier, der Tischplatte (TP) angeordnet ist.

9. Tisch nach Anspruch 8,
bei dem die Auswerteschaltung (EV) über eine Schraubverbindung (SV) an der Tischplatte (TP) befestigt ist, wobei eine elektrische Verbindung zwischen der Auswerteschaltung (EV) und der leitfähigen Fläche über die Schraubverbindung (SV) hergestellt ist, insbesondere ausschließlich hergestellt ist.

10. Antriebssystem für einen elektrisch höhenverstellbaren Tisch, das Antriebssystem umfassend eine Bedieneinrichtung nach einem der Ansprüche 1 bis 7, den wenigstens einen elektrischen Antrieb (EA) zur Höhenverstellung der Tischplatte (TP) des Tisches sowie die Steuerung (CTRL) zur Ansteuerung des Antriebs (EA), wobei der Antrieb eine an einem Motor des Antriebs angeordnete Motorelektronik (ME) aufweist, die die Steuerung und die Auswerteschaltung (EV) umfasst.

11. herfahren zur Höhenverstellung einer Tischplatte (TP) eines Tisches, der ein im Bereich der Tischplatte (TP) angeordnetes Betätigungselement (BE, EMS, CS) sowie einen Kraftsensor (FS) aufweist, der eingerichtet ist, eine auf die Tischplatte (TP) wirkende Kraft zu messen, das Verfahren umfassend:
- Detektieren einer Betätigung des Betätigungselements (BE, EMS, CS) während eine Höhenverstellung der Tischplatte (TP) blockiert, insbesondere mechanisch blockiert, ist;
- Empfangen von Messwerten von dem Kraftsensor (FS) in einem vorbestimmten Zeitraum nach der detektierten Betätigung;
- Bestimmen eines Kraftänderungswerts, insbesondere einer absoluten Kraftänderung und/oder eines Kraftgradienten, aus den empfangenen Messwerten; und
- wenn der Kraftänderungswert größer als ein Schwellwert ist, Durchführen einer Höhenverstellung der Tischplatte (TP) in einer Richtung, die von einem Vorzeichen des Kraftänderungswerts abhängt.

12. herfahren nach Anspruch 11,
wobei während der Blockierung der Höhenverstellung keine elektrische Leistung an einen Motor des Antriebs (EA) zugeführt wird.

13. herfahren nach Anspruch 11 oder 12,
wobei der Kraftsensor (FS) eine zwischen dem Antrieb (EA) und der Tischplatte (TP) wirkende Kraft misst.

14. herfahren nach einem der Ansprüche 11 bis 13,
wobei der Tisch ein weiteres im Bereich der Tischplatte (TP) angeordnetes Betätigungselement (BE, EMS, CS) aufweist, und wobei die Höhenverstellung der Tischplatte (TP) nur durchgeführt wird, wenn während der Blockierung der Höhenverstellung der Tischplatte (TP) eine Betätigung beider Betätigungselemente (BE, EMS, CS) detektiert wird.

15. herfahren nach einem der Ansprüche 11 bis 14,
wobei die Höhenverstellung der Tischplatte (TP) mit einer Geschwindigkeit durchgeführt wird, die von einem Betrag der vom Kraftsensor (FS) gemessenen Kraft abhängt.

## Claims

1. Operating device for an electrically height-adjustable table having at least one electrical drive (EA) for adjusting the height of a table top (TP) of the table, and a controller (CTRL) for controlling the drive (EA), comprising
- an actuating element (BE, EMS, CS) to be arranged in the region of the tabletop (TP);
**characterized by**
- a force sensor (FS) that is designed to measure a force acting on the tabletop (TP); and
- an evaluation circuit (EV) that is designed:
- to detect an actuation of the actuating element (BE, EMS, CS) while a height adjustment of the tabletop (TP) is blocked, in particular, mechanically blocked;
- to receive measurement values from the force sensor (FS) in a predetermined period of time after the detected actuation;
- to determine a force alteration value, in particular an absolute force alteration and/or a force gradient, from the received measurement values; and
- if the force alteration value is greater than a threshold value, to output a control signal to the controller (CTRL), the signal initiating a height adjustment of the tabletop (TP) in a direction, wherein the direction depends on a sign of the force alteration.

2. Operating device according to Claim 1,
in which no electric power is applied to a motor of the drive (EA) during the blocking of the height adjustment.

3. Operating device according to Claim 1 or 2,
in which the force sensor (FS) is designed to measure a force acting between the drive (EA) and the tabletop (TP).

4. Operating device according to one of Claims 1 to 3, further comprising an additional actuating element (BE, EMS, CS) to be arranged in the area of the tabletop (TP), wherein the evaluation circuit (EV) is designed to initiate a height adjustment of the tabletop (TP) only if actuation of both actuating elements (BE, EMS, CS) is detected during the blocking of the height adjustment of the tabletop (TP).

5. Operating device according to one of Claims 1 to 4, in which the evaluation circuit (EV) is designed to output a control signal having speed information for the height adjustment, wherein the speed information depends on a magnitude of the force measured by the force sensor (FS).

6. Operating device according to one of Claims 1 to 5, wherein the actuating element (BE) comprises a touch-sensitive sensor, particularly a capacitive sensor (CS).

7. Operating device according to Claim 6,
in which the touch-sensitive sensor (CS) is formed by a conductive area, in particular made from a conductive paint.

8. Electrically adjustable table comprising an operating unit according to Claim 7, the at least one electrical drive (EA) for adjusting the height of the tabletop (TP), and the controller (CTRL) for controlling the drive (EA), wherein the conductive surface (CS) is arranged on a surface of the tabletop (TP) or under a coating (CT) of the tabletop (TP), particularly a coating made of plastic or veneer.

9. Table according to Claim 8,
wherein the evaluation circuit (EV) is mounted via a screw connection (SV) on the tabletop (TP), wherein an electrical connection between the evaluation circuit (EV) and the conductive surface is established via the screw connection, (SV) in particular established exclusively thereby.

10. Drive system for an electrically height-adjustable table, the drive system comprising an operating device according to one of Claims 1 to 7, the at least one electrical drive (EA) for adjusting the height of the tabletop (TP) of the table, and the controller (CTRL) for controlling the drive (EA), wherein the drive has a motor electronics unit (ME) arranged on the motor of the drive and comprising the controller and the evaluation circuit (EV).

11. Method for adjusting the height of a table top (TP) of a table having an actuating element (BE, EMS, CS) arranged in the region of the tabletop (TP), and a force sensor (FS) that is designed to measure a force acting on the tabletop (TP), the method comprising:
- detecting an actuation of the actuating element (BE, EMS, CS) while a height adjustment of the tabletop (TP) is blocked, more particularly mechanically blocked;
- receiving measurement values from the force sensor (FS) in a predetermined period of time after the detected actuation;
- determining a force alteration value, particularly an absolute force alteration and/or a force gradient, from the received measurement values; and
- if the force alteration value is greater than a threshold value, performing a height adjustment of the tabletop (TP) in a direction that depends on a sign of the force alteration value.

12. Method according to Claim 11,
wherein no electric power is applied to a motor of the drive (EA) during the blocking of the height adjustment.

13. Method according to Claim 11 or 12,
wherein the force sensor (FS) measures a force acting between the drive (EA) and the tabletop (TP).

14. Method according to one of Claims 11 to 13,
wherein the table has an additional actuating element (BE, EMS, CS) arranged in the region of a tabletop (TP), and wherein the height of the tabletop (TP) is adjusted only if an actuation of both actuating elements (BE, EMS, CS) is detected during the blocking of the height adjustment of the tabletop (TP).

15. Method according to one of Claims 11 to 14,
wherein the height adjustment of the tabletop (TP) is performed at a speed that depends on a magnitude of the force measured by the force sensor (FS).

## Revendications

1. Dispositif de commande pour une table réglable électriquement en hauteur, qui comprend au moins un entraînement électrique (EA) pour le réglage en hauteur d'un plateau (TP) de table et une commande (CTRL) pour actionner l'entraînement (EA), le dispositif de commande comprenant
- un élément d'actionnement (BE, EMS, CS) à agencer dans la zone du plateau de table (TP) ;
**caractérisé par**
- un capteur de force (FS) conçu pour mesurer une force agissant sur le plateau de table (TP) ; et
- un circuit d'évaluation (EV) conçu pour
- détecter un actionnement de l'élément d'actionnement (BE, EMS, CS) alors qu'un réglage en hauteur du plateau de table (TP) est bloqué, notamment bloqué mécaniquement ;
- la réception, dans une période de temps prédéterminée après l'actionnement détecté, des valeurs mesurées depuis le capteur de force (FS) ;
- la détermination d'une valeur de changement de force, notamment un changement de force absolue et/ou un gradient de force à partir des valeurs mesurées reçues, ; et
- l'émission d'un signal de commande au niveau de la commande (CTRL), lorsque la valeur de changement de force est supérieure à une valeur seuil, lequel signal déclenche un réglage en hauteur du plateau de table (TP) dans une direction, la direction dépendant d'un signe de la valeur de changement de force.

2. Dispositif de commande selon la revendication 1,
dans lequel aucune puissance électrique n'est fournie à un moteur d'entraînement (EA) pendant le blocage du réglage en hauteur.

3. Dispositif de commande selon la revendication 1 ou 2, dans lequel le capteur de force (FS) est configuré pour mesurer une force agissant entre l'entraînement (EA) et le plateau de table (TP).

4. Dispositif de commande selon l'une quelconque des revendications 1 à 3, comprenant en outre un autre élément d'actionnement (BE, EMS, CS) à agencer dans la zone du plateau de table (TP), le circuit d'évaluation (EV) étant configuré pour déclencher un réglage en hauteur du plateau de table (TP) que lorsque un actionnement des deux éléments d'actionnement (BE, EMS, CS) est détecté durant le blocage du réglage en hauteur du plateau de table (TP).

5. Dispositif de commande selon l'une quelconque des revendications 1 à 4,
dans lequel le circuit d'évaluation (EV) est configuré pour émettre le signal de commande avec une information de vitesse pour le réglage en hauteur, l'information de vitesse dépendant d'une quantité de la force mesurée par le capteur de force (FS).

6. Dispositif de commande selon l'une quelconque des revendications 1 à 5, dans lequel l'élément d'actionnement (BE) comprend un capteur (CS) sensible au contact, notamment un capteur capacitif.

7. Dispositif de commande selon la revendication 6,
dans lequel le capteur (CS) sensible au contact est formé par une surface conductrice, notamment d'un vernis conducteur.

8. Table électriquement réglable en hauteur, comprenant un dispositif de commande selon la revendication 7, le au moins un entraînement électrique (EA) pour le réglage en hauteur du plateau de table (TP) du table ainsi que la commande (CTRL) pour actionner l'entraînement (EA), la surface conductrice (CS) étant agencée sur une surface du plateau de table (TP) ou sous un revêtement réalisé notamment en matière plastique ou en placage (CT) du plateau de table (TP).

9. Table selon la revendication 8,
dans laquelle le circuit d'évaluation (EV) est fixé au niveau du plateau de table (TP), et par l'intermédiaire d'une connexion à vis (SV), étant générée une connexion électrique, notamment générée de manière exclusive, entre le circuit d'évaluation (EV) et la surface conductrice par l'intermédiaire de la connexion à vis (SV).

10. Système d'entraînement pour une table électriquement réglable en hauteur, le système d'entraînement comprenant un dispositif de commande selon l'une quelconque des revendications 1 à 7, le au moins un entraînement électrique (EA) pour le réglage de la hauteur du plateau de table (TP) ainsi que la commande (CTRL) pour actionner l'entraînement (EA), l'entraînement comprenant un système électronique de moteur (ME) agencé au niveau d'un moteur d'entraînement, lequel système comprend la commande et le circuit d'évaluation (EV).

11. Procédé de réglage en hauteur d'un plateau de table (TP) d'une table comportant un élément d'actionnement (BE, EMS, CS) agencé dans la zone du plateau de table (TP) ainsi qu'un capteur de force (FS) configuré pour mesurer une force agissant sur le plateau de table (TP), le procédé comprenant :
- la détection d'un actionnement de l'élément d'actionnement (BE, EMS, CS) alors qu'un réglage en hauteur du plateau de table (TP) est bloqué, notamment bloqué mécaniquement ;
- la réception, dans une période de temps prédéterminée après l'actionnement détecté, des valeurs mesurées depuis le capteur de force (FS) ;
- la détermination à partir des valeurs mesurées reçues d'une valeur de changement de force, notamment un changement de force absolu et/ou un gradient de force ; et
- la réalisation d'un réglage en hauteur du plateau de table (TP) dans une direction qui dépend d'un signe de la valeur de changement de force, lorsque la valeur de changement de force est supérieure à une valeur seuil.

12. Procédé selon la revendication 11,
dans lequel aucune puissance électrique n'est fournie au niveau d'un moteur d'entraînement (EA) pendant le blocage du réglage en hauteur.

13. Procédé selon l'une des revendications 11 ou 12,
dans lequel le capteur de force (FS) mesure une force agissant entre l'entraînement (EA) et le plateau de table (TP).

14. Procédé selon l'une quelconque des revendications 11 à 13, dans lequel la table comporte un autre élément d'actionnement (BE, EMS, CS) agencé dans la zone du plateau de table (TP), et dans lequel le réglage en hauteur du plateau de table (TP) est uniquement effectué si un actionnement des deux éléments d'actionnement (BE, EMS, CS) est détectée durant le blocage du réglage en hauteur du plateau de table (TP).

15. Procédé selon l'une quelconque des revendications 11 à 14, dans lequel le réglage en hauteur du plateau de table (TP) est effectué à une vitesse qui dépend d'une quantité de la force mesurée par le capteur de force (FS).
